# EUROPÄISCHE PATENTANMELDUNG

(11) **EP 4 686 019 A1**
(43) Veröffentlichungstag der Anmeldung: **28.01.2026**
(21) Anmeldenummer: 24190483.8
(22) Anmeldetag: 23.07.2024
(51) Int. Cl.: H02G 3/04

(54) **KABELBAHN UND KABELFÜHRUNGSVORRICHTUNG**

(71) Anmelder: Zurecon AG, 9053 Teufen AR (CH)
(72) Erfinder: Gerster, Alexander, 8006 Zürich (CH); Obrist, Roland, 7504 Pontresina (CH); Kasper, Gian, 5742 Kölliken (CH)
(74) Vertreter: Rutz & Partner

(57) **Zusammenfassung**

Die Kabelbahn (1), die aus Metall gefertigt ist, die eine sich entlang einer Gerade oder einer Kurve erstreckende Kanalachse aufweist, und die zur Aufnahme von Kabeln und Leitungen vorgesehen ist, umfasst einen Kabelbahnboden (11), an den auf beiden Seiten vorzugsweise um 90° bis 105° gegenüber dem Kabelbahnboden (11) geneigte Seitenwände (12) anschliessen und der einen zwischen zwei Seitenbereichen (115) liegenden Mittelbereich (11M) aufweist. Erfindungsgemäss ist vorgesehen, dass im Kabelbahnboden (11) Bodenperforationen (110) und in den Seitenwänden (12) Wandperforationen (120) entlang von Trennlinien (T) angeordnet sind, die in einer Ebene senkrecht zur Kanalachse (x) verlaufen und dass die den Trennlinien (T) zugeordneten Bodenperforationen (110) und Wandperforationen (120) für jede der Trennlinien (T) eine Solltrennstelle bilden, die mittels eines Trennwerkzeugs auftrennbar ist.

## Beschreibung

Die Erfindung betrifft eine Kabelbahn sowie eine Kabelführungsvorrichtung mit wenigstens einer solchen Kabelbahn, die von Tragvorrichtungen gehalten ist.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität in metallenen Kabelbahnen, auch Kabelkanäle oder Kabelpritschen genannt, beispielsweise von einem Schaltfeld zu Verbrauchern geführt. Kabelbahnen sowie Tragvorrichtungen für Kabelbahnen, die typischerweise Halteprofile, die an einer Wand oder Decke montierbar sind, und mit den Halteprofilen verbindbare Ausleger umfassen, sind beispielsweise im Produktkatalog der LANZ OENSINGEN AG, Juli 2017, beschrieben.

Kabelbahnen, die typischerweise einen Kabelbahnboden und beidseits daran anschliessende Seitenwände aufweisen, sollen verschiedene Funktionen erfüllen.

Kabelbahnen sollen eine hohe Stabilität aufweisen, so dass schweres Kabelmaterial getragen werden kann und möglichst grosse Stützabstände zwischen den Auslegern, auf die die Kabelbahn abgelegt ist, realisierbar sind, ohne dass störende Deformationen der Kabelbahn auftreten.

Unter Last soll vermieden werden, dass die Durchbiegung der Kabelbahn zwischen zwei Auslegern einen zulässigen Wert überschreitet. Weiterhin soll vermieden werden, dass sich der Kabelbahnboden durchbiegt. Auch eine Torsion der Kabelbahn bei Einwirkung von Drehmomenten soll weitgehend vermieden werden.

Weiterhin soll die Kabelbahn derart ausgestaltet sein, dass eingelegte Kabel belüftet, gekühlt und frei von Feuchtigkeit gelagert werden.

Weiterhin sollen Kabelbahnen kostengünstig herstellbar, stapelbar, vorteilhaft transportierbar und mit geringem Aufwand montierbar sein.

Dazu sollen Kabelbahnen möglichst wenig Gewicht und somit möglichst wenig Material aufweisen. Durch die Reduktion des eingesetzten Materials reduzieren sich jedoch nicht nur das Gewicht und die Herstellungskosten, sondern auch die Festigkeit der Kabelbahnen. Zur Vermeidung des Durchbiegens der Kabelbahnen sind die Ausleger, welche die Kabelbahn abstützen, daher näher beieinander anzuordnen. Dies verursacht wiederum einen erhöhten Montageaufwand. Der Ingenieur ist bei der Dimensionierung von Kabelbahnen daher erheblichen Sachzwängen unterworfen, weshalb Materialreduktionen bei der Fertigung der Kabelbahn nur erzielt werden können, wenn anderweitige Nachteile in Kauf genommen oder verbesserte Lösungen gefunden werden.

Zur Erhöhung der Festigkeit der Kabelbahn wird in der EP1056175A1 vorgeschlagen, den Kabelbahnboden mit Sicken zu verfestigen.

Für den Aufbau einer Kabelführungsvorrichtung ist zudem von Bedeutung, dass einzelne Kabelbahnen, Kabelbahneinheiten oder Kabelkanaleinheiten, in passender Länge zusammengesetzt werden können.

Die EP21189702A1 offenbart Kabelbahnen, deren Endstücke asymmetrisch und komplementär zueinander ausgebildet sind, sodass die Endstücke von zwei Kabelbahneinheiten miteinander verbindbar sind. Die Kabelführungsvorrichtung kann daher in einfacher Weise aufgebaut werden, indem Kabelbahneinheiten formschlüssig zusammengesetzt werden. Aufgrund der besonderen Ausgestaltung der Endstücke ist es hingegen nicht möglich, diese Kabelbahneinheiten bedarfsweise zu kürzen, beispielsweise, um eine Lücke zwischen zwei bereits installierten Kabelbahneinheiten zu schliessen. Zu diesem Zweck sind Kabelbahneinheiten mit unterschiedlichen Längen bereitzustellen.

Die EP18191427A1 offenbart eine Vorrichtung zum Verbinden von Kabelbahneinheiten, die bedarfsweise zugeschnitten werden. Nachteilig bei dieser Vorrichtung ist hingegen, dass der Aufwand für das Zuschneiden der aus massivem Blech gefertigten Kabelbahneinheiten erheblich ist.

Heute wird auf der Baustelle mit einem Markierstift und einem Massstab die zu schneidende Stelle an einer Kabelbahn markiert, die auf eine passende Länge zu verkürzen ist. Um einen präzisen rechten Winkel zur Längsachse der Kabelbahn zu erhalten, wird mit Hilfe eines 90° Flachwinkels vorzugsweise auf allen drei Seiten der Kabelbahn eine durchgehende Trennlinie eingezeichnet. Das Aufzeichnen der Trennlinie erfolgt regelmässig am Boden ohne Fixiereinrichtungen und ist mühsam und zeitintensiv, da die gegebenenfalls mehrere Meter lange Kabelbahn gedreht und gewendet und in jeder Lage wieder fixiert werden muss. Oft verlaufen die gezeichneten Trennlinien daher nur unpräzise.

Nach dem Aufzeichnen der Trennlinie wird mit einer Trennscheibe der Markierung entlanggefahren, was wiederum zeitintensiv und materialintensiv ist. Da die Trennscheibe im Material der Kabelbahn nicht geführt wird, ist ein genaues Arbeiten unumgänglich oder es muss mühsam die Schnittstelle nachgearbeitet werden. Bei einer unpräzisen Führung der Trennscheibe wird diese zudem erheblich beansprucht und muss gegebenenfalls früh ersetzt werden.

Weiterhin besteht das Problem, dass die rotierende Trennscheibe beim Aufsetzen auf die Kabelbahn seitlich verrutschen oder wegspringen kann, falls das Trennwerkzeug nicht fest gehalten wird. Weiterhin besteht bei dieser Arbeit ein Verletzungsrisiko, weshalb das Tragen von Schutzhandschuhen erforderlich ist.

Beim beschriebenen Trennvorgang resultieren daher oft unpräzise Schnittverläufe, weshalb Kabelbahnendstücke nicht bündig aneinander anschliessen und die installierte Kabelführungsvorrichtung dadurch unvorteilhaft in Erscheinung tritt.

An der Trennstelle verbleiben zudem regelmässig Ecken und Kanten, die wiederum eine Verletzungsgefahr verursachen und deshalb mit einer aufwändigen Nachbearbeitung durch Schleifen oder Feilen beseitigt werden müssen.

Zur Vermeidung dieses Problems wird in der DE202020100716U1 die Verwendung einer Schneidlehre vorgeschlagen, in die die Kabelbahn eingesetzt wird. Die Schneidlehre weist Führungssschlitze auf, die es erlauben ein Schneidewerkzeug zu führen und die Kabelbahn entlang dem Führungsschlitz zu trennen. Die Verwendung einer Schneidlehre hat hingegen den Nachteil, dass diese angepasst an die zu bearbeitende Kabelbahn zuerst am Installationsort bereitgestellt werden muss. Ferner ist eine solche Schneidlehre zur Verwendung mit einer Säge aber nicht mit einer Trennscheibe geeignet. Bei der Verwendung einer rotierenden Trennscheibe besteht das Risiko, dass die Schneidlehre bereits bei den ersten Arbeitsvorgängen beschädigt wird.

Der vorliegenden Erfindung liegt daher die Aufgabe zugrunde, eine verbesserte Kabelbahn sowie eine Kabelführungsvorrichtung mit wenigstens einer solchen Kabelbahn zu schaffen.

Erfindungsgemässe Kabelbahnen, insbesondere auch aus massivem Metallblech gefertigte Kabelbahnen, sollen einfach, präzise und mit geringem Aufwand auf gewünschte Längen zugeschnitten werden können, um wertvolle Arbeitszeit am Installationsort einzusparen und dem Installationspersonal die Arbeit zu erleichtern. Die dafür vorgesehenen Massnahmen sollen die Festigkeit der Kabelbahn jedoch nicht störend beeinflussen.

Insbesondere soll ein einfaches und präzises Zuschneiden der Kabelbahnen ohne Schneidlehre senkrecht zur Kanalachse ermöglicht werden, um die optische Qualität und Passgenauigkeit miteinander verbundener Kabelbahnen zu gewährleisten. Die Stirnseiten von einander zugewandten Kabelbahnendstücken sollen bündig aneinander liegen und optisch nicht störend in Erscheinung treten.

Aufwendungen zur Markierung einer Trennlinie sollen ebenso vermieden werden wie Vorrichtungen zur Fixierung der Kabelbahn oder eine Schneidlehre.

Weiterhin soll sichergestellt werden, dass nach dem Zuschneiden der Kabelbahnen keine gefährlichen Ecken und Kanten verbleiben, an denen sich das Installationspersonal verletzen könnte. Eine entsprechende Nachbearbeitung der Kabelbahnen nach dem Zuschneiden soll nach Möglichkeit vermieden oder auf ein Minimum reduziert werden.

Diese Aufgabe wird mit einer Kabelbahn nach Anspruch 1 und einer Kabelführungsvorrichtung gemäss Anspruch 14 gelöst. Vorteilhafte Ausgestaltungen der Erfindung sind in weiteren Ansprüchen angegeben.

Die Kabelbahn, die aus Metall gefertigt ist, die eine sich entlang einer Gerade oder einer Kurve erstreckende Kanalachse aufweist, und die zur Aufnahme von Kabeln, Rohren und Leitungen vorgesehen ist, umfasst einen Kabelbahnboden, an den auf beiden Seiten gegenüber dem Kabelbahnboden vorzugsweise um 90° bis 105° nach aussen geneigte Seitenwände anschliessen und der einen zwischen zwei Seitenbereichen liegenden Mittelbereich aufweist.

Erfindungsgemäss ist vorgesehen, dass im Kabelbahnboden Bodenperforationen und in den Seitenwänden Wandperforationen entlang von Trennlinien angeordnet sind, die in einer Ebene senkrecht zur Kanalachse verlaufen und dass die den Trennlinien zugeordneten Bodenperforationen und Wandperforationen für jede der Trennlinien eine Solltrennstelle bilden, die mittels eines Trennwerkzeugs auftrennbar ist.

Das Installationspersonal kann daher das Trennwerkzeug entlang einer ausgewählten Trennlinie führen, weshalb das Einzeichnen einer Markierung nicht erforderlich ist. Die Bodenperforationen und Wandperforationen unterstützen einerseits das Führen des Trennwerkzeugs. Aufgrund des an den Bodenperforationen und Wandperforationen reduziert sich ferner das aufzutrennende Material, weshalb der Trennvorgang rasch durchgeführt werden kann. Die durch die Bodenperforationen und Wandperforationen und gegebenenfalls weitere Öffnungen oder Schlitzöffnungen, resultierende Materialreduktion entlang einer Trennlinie liegt vorzugsweise bei über 50 %, beispielsweise bei 65 % bis 85 %, weshalb sich der Arbeitsaufwand entsprechend reduziert.

Kabelbahnen oder Kabelkanäle mit einem Kabelbahnboden und beidseitig damit verbundenen Seitenwänden, die vorzugsweise um 90° bis 105° gegenüber dem Kabelbahnboden nach aussen geneigt sind, weisen aufgrund ihrer Geometrie bereits eine hohe Eigenstabilität auf. Die Seitenwände, die gegenüber dem Kabelbahnboden geneigt sind, verleihen der Kabelbahn eine hohe Festigkeit bezüglich der Durchbiegung zwischen zwei Auslegern, die durch einen Stützabstand voneinander beanstandet sind und die von einem Halteprofil, beispielsweise einer mit der Gebäudedecke oder einer Gebäudewand verbundenen Deckenstütze oder Wandstütze gehalten sind.

Sofern die Kabelbahn aus dünnem Blech gefertigt ist, weist der Kabelbahnboden oft keine hohe Festigkeit auf, sodass unter Last eine Durchbiegung zwischen den Seitenwänden auftritt.

Durch die Anordnung von Transversalsicken im Kabelbahnboden, die sich senkrecht zur Kanalachse erstrecken, die entlang der Kanalachse in gleichen oder ungleichen Abständen parallel zueinander in den Kabelbahnboden eingeformt sind und die sich gegen die Aussenseite der Kabelbahn zu einem Transversalschlitz hin verjüngen, wird die Stabilität des Kabelbahnbodens erhöht, obwohl Transversalschlitze und somit Schlitzöffnungen in den Kabelbahnboden eingefügt werden.

Indem den Bodenperforationen und Wandperforationen einer Trennlinie wenigstens eine entlang der Trennlinie verlaufende Transversalsicke im Kabelbahnboden zugeordnet wird, wird die Solltrennstelle vorteilhaft erweitert. Die Transversalsicke bildet eine vergleichsweise lange Bodenperforation, die einerseits den Boden entlang der Solltrennstelle verfestigt und andererseits ein wesentliches Element der Solltrennstelle bildet.

Der Installateur kann die Kabelbahn daher besonders einfach entlang einer der Trennlinien auftrennen und die Kabelbahn bedarfsweise konfektionieren. Durch die Transversalsicke mit dem Transversalschlitz ist eine weitgehende Trennung bereits erfolgt, die durch die Bodenperforationen und Wandperforationen noch erweitert wird. Der Installateur kann daher das verbliebene Material zwischen dem Transversalschlitz und den Bodenperforationen und Wandperforationen mit geringem Aufwand beseitigen und das überflüssige Kabelbahnsegment abtrennen.

Durch die Integration der Transversalschlitze in die Trennlinien ist der Bedarf an Bodenperforationen und Wandperforationen zur Realisierung der Solltrennstelle daher gering, weshalb die zusätzlichen Bodenperforationen und Wandperforationen keine spürbare Schwächung der Kabelbahn verursachen. Die Transversalsicken und die Bodenperforationen ergänzen sich daher ideal.

In bevorzugten Ausgestaltungen wird beim Übergang zwischen dem Kabelbahnboden und wenigstens einer der Seitenwände innerhalb der Trennlinie eine Eckperforation vorgesehen. Diese Eckperforation hat eine Mehrfachfunktion. Einerseits wird der Aufwand zum Auftrennen der Solltrennstelle weiter reduziert. Andererseits kann ein Trennwerkzeug, beispielsweise eine rotierende Trennscheibe, gegebenenfalls eine Blechschere, bei dieser Eckperforation besonders vorteilhaft ansetzen. An einer Ecke typischerweise entstehende Ecken und Kanten, an denen sich das Installationspersonal verletzen kann, können vorteilhaft vermieden werden.

In einer weiteren vorzugsweisen Ausgestaltung ist entlang jeder Trennlinie wenigstens eine Verformung des Kabelbahnbodens und/oder der Seitenwände vorgesehen. Beispielsweise ist eine Rinne oder Nut in den Kabelbahnboden und/oder die Seitenwände eingeprägt, die es erlaubt, die Solltrennstelle einfacher aufzutrennen. Die Breite der wenigstens einen Verformung ist vorzugsweise gleich oder geringer als die Breite der Bodenperforationen und der Wandperforationen, die in allen Ausgestaltungen vorzugsweise in einem Bereich von 1 mm - 4 mm liegt und vorzugsweise der Breite Materials entspricht, das mittels des Trennwerkzeugs abgetragen wird. Idealerweise entspricht die Breite Perforationen der der Standardbreite einer Trennscheibe, die für den Trainervorgang verwendet wird.

Sofern Material in der Breite der Bodenperforationen und der Wandperforationen beispielsweise mittels der Trennscheibe oder einer Metallsäge, abgetragen wird, resultiert ein weitgehend stufenlose Übergang zwischen den aufgetrennten Perforationen und der anschliessenden aufgetrennten Trennlinie. Es verbleiben keine störenden Ecken und Kanten.

In vorzugsweisen Ausgestaltungen können im Kabelbahnboden entlang den Trennlinien auch mehrere voneinander getrennte Transversalsicken vorgesehen werden.

Die gegenseitigen Abstände benachbarter Transversalsicken in Richtung der Kanalachse liegen vorzugsweise in einem Bereich von 2 cm - 12 cm. Dies erlaubt es dem Installationspersonal, die Kabelbahn um eine normalerweise genügende Länge zu verkürzen.

Die Länge der Transversalsicke oder der Transversalsicken entlang einer Trennlinie beträgt vorzugsweise 2/3 - 4/5 der Breite des Kabelbahnbodens. Dadurch wird sichergestellt, dass der Aufwand zum Auftrennen der Solltrennstelle wesentlich reduziert wird.

In weiteren vorzugsweisen Ausgestaltungen sind in den Seitenbereichen des Kabelkanalbodens sich parallel zur Kanalachse erstreckende Axialsicken vorgesehen, die sich nach unten zu einem Axialschlitz hin verjüngen. Die Axialsicken erhöhen die Stabilität des Kabelkanalbodens in einer Biegerichtung parallel zur Kanalachse. Die Transversalsicken erhöhen die Stabilität des Kabelkanalbodens hingegen in einer Biegerichtung senkrecht zum Kabelkanalboden.

Der Kabelkanalboden weist einen zwischen zwei Seitenbereichen liegenden Mittelbereich auf. Im Mittelbereich sind normalerweise die Transversalsicken und in den Seitenbereichen sind normalerweise die Axialsicken vorgesehen. Die Transversalsicken könne hingegen auch in die Seitenbereiche eingreifen. Vorzugsweise wird von jeder Trennlinie wenigstens eine der Axialsicken durchlaufen, sodass zum Abtrennen eines Kabelbahnsegments noch weniger Material aufgetrennt werden muss.

Im Kabelbahnboden und/oder in den Seitenwänden sind vorzugsweise Belüftungsöffnungen vorgesehen. Die Belüftungsöffnungen erlauben die Ventilation von Kabeln und Leitungen, die in die Kabelbahn eingelegt sind. Die Belüftungsöffnungen sind vorzugsweise Längsschlitze, die parallel zur Kabelbahnachse ausgerichtet sind.

In besonders bevorzugten Ausgestaltungen ist vorgesehen, dass an die Transversalschlitze und/oder an die Axialschlitze und/oder an die Belüftungsöffnungen einseitig oder auf einander gegenüberliegenden Seiten je eine Adaptionsöffnung anschliesst, die sich senkrecht zur Kanalachse entlang der zugehörigen Trennlinie erstreckt.

Vorzugsweise verjüngt sich die Adaptionsöffnung entlang der Trennlinie. Beispielsweise verlaufen die Seiten der Adaptionsöffnung entlang einer Kurve oder entlang einer Kurve und asymptotisch gegen die Trennlinie.

Durch diese Massnahmen wird bewirkt, dass nach dem Auftrennen der Solltrennstelle die daran anschliessenden Ausnehmungen entlang einer Kurve gegen die aufgetrennte Trennlinie verlaufen und Ecken, an denen sich das Installationspersonal verletzen könnte, weitgehend vermieden werden. Zumindest wird durch diese Massnahme der Aufwand zur Nachbearbeitung der konfektionierten Kabelbahn wesentlich reduziert, was Zeit und Kosten spart.

Die Kabelbahn weist vorzugsweise an den vom Kabelbahnboden abgewandten Seiten der Seitenwände je einen Wandabschluss auf, der vorzugsweise mit einer Abschlussperforation versehen ist, die von der Trennlinie durchlaufen wird. Diese Massnahme erlaubt es, auch den Wandabschluss in einfacher Weise aufzutrennen. Die Abschlussperforationen bilden wiederum vorteilhafte Werkzeugansatzpunkte, die es erlauben, eine rotierende Trennscheibe sicher anzusetzen und entlang der Trennlinie weiterzuführen.

Zur Realisierung eines Wandabschlusses werden die vom Kabelbahnboden abgewandten Seiten der Seitenwände beispielsweise nach aussen gebogen oder gerollt.

Konfektionierte Kabelbahnen oder Kabelbahneinheiten können mittels Verbindungsvorrichtungen, beispielsweise der Verbindungsvorrichtung der EP3618208A1 miteinander verbunden werden, um längere Kabelführungsvorrichtungen zu bilden, die Ausleger und an einer Decke oder Wand montierte Halteprofile umfassen.

Die in den Kabelbahnboden eingearbeiteten Sicken können sich nach unten oder nach oben verjüngen. Sofern sich die Sicken nach unten oder nach aussen verjüngen, liegen die eingelegten Kabel nicht auf den Sicken auf. Sofern die Sicken sich hingegen nach oben in den Querschnitt der Kabelbahn hinein verjüngen, so liegen die Kabel auf den Sicken auf und werden durch resultierende Luftspalte besser belüftet. In diesem Fall ist darauf zu achten, dass an den Schlitzöffnungen keine Kanten vorgesehen sind, welche dass eingelegte Kabel verletzen könnten. Dies kann erreicht werden, indem der Rand der Schlitzöffnungen zurück in die Sicke eingesenkt wird.

Erfindungsgemässe Kabelbahnen können eine gerade oder entlang einer Kurve verlaufende Kanalachse aufweisen. Eine Kabelbahn kann daher auch als Kurvenstück ausgebildet sein, dessen Transversalsicken somit radial zum Mittelpunkt des Kurvenstücks verlaufen. Beispielsweise wird ein Kurvenstück geliefert, das in einem Winkel von 90° verläuft und geeignet ist, zwei senkrecht zueinander ausgerichtete Kabelbahnen miteinander zu verbinden.

Die von den Transversalsicken definierten Trennlinien erlauben es beispielsweise Kabelbahnsegmente in der Form von Kreissegmenten abzutrennen, deren Schenkel einem Winkel von beispielsweise 8° oder 18° einschliessen. Durch Abtrennen eines entsprechend gewählten Kabelbahnsegments oder Kreissegments können in einem entsprechenden Winkel zueinander verlaufende Kabelbahnsegmente miteinander verbunden werden. Mittels erfindungsgemässen Kabelbahnen lassen sich daher beliebige Kabelführungsvorrichtungen mit geringem Aufwand realisieren.

Nachfolgend wird die Erfindung anhand von Zeichnungen näher erläutert. Dabei zeigt:
- Fig. 1: eine erfindungsgemässe Kabelführungsvorrichtung 10 mit einer erfindungsgemässen Kabelbahn 1, die einen Kabelbahnboden 11 und beidseits daran anschliessende Seitenwände 12 aufweist und die auf Ausleger 2 abgelegt ist, die in einem Stützabstand a voneinander beanstandet von Halteprofilen 3 gehalten sind;
- Fig. 2: einen Teil der Kabelbahn 1 von Fig. 1 in einer vorzugsweisen Ausgestaltung mit einer exemplarisch gezeigten ersten Solltrennstelle, die entlang einer Trennlinie T verlaufende Bodenperforationen 110 und Wandperforationen 120 aufweist, und mit einer exemplarisch gezeigten zweiten Solltrennstelle, die entlang einer Trennlinie T verlaufende Bodenperforationen 110, Wandperforationen 120 und eine Transversalsicke 111 umfasst;
- Fig. 3: eine Hälfte der Kabelbahn 1 von Fig. 2;
- Fig. 4: einen Schnitt entlang der Kanalachse x der Kabelbahn 1 von Fig. 3;
- Fig. 5: die Kabelbahn 1 von Fig. 2 mit einem abgetrennten Kabelbahnsegment 1' von oben; und
- Fig. 6: die Kabelbahn 1 mit dem abgetrennten Kabelbahnsegment 1' von Fig. 5 von unten.

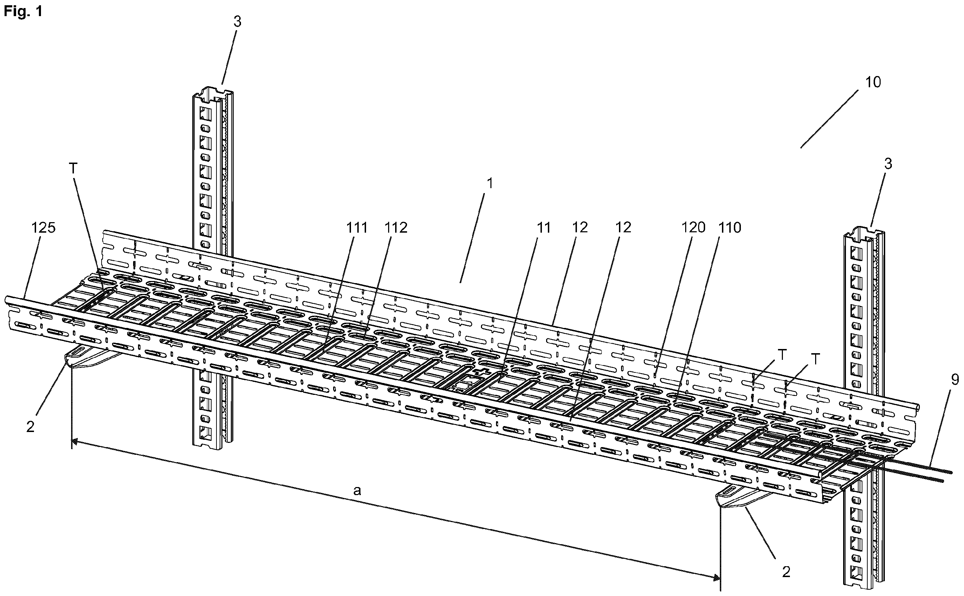

Fig. 1 zeigt eine erfindungsgemässe Kabelführungsvorrichtung 10 mit einer erfindungsgemässen Kabelbahn 1, die aus Metall gefertigt ist und die einen Kabelbahnboden 11 und beidseits daran anschliessende Seitenwände 12 aufweist. Die Kabelbahn 1 weist eine Kabelbahnachse oder Längsachse x auf, die in der vorliegenden Ausgestaltung entlang einer Gerade verläuft, in anderen Ausgestaltungen der Kabelbahn 1 aber auch entlang einer Kurve verlaufen kann. Die Seitenwände 12 sind in einem Bereich von 90° bis 105° gegenüber dem Kabelbahnboden 11 nach aussen geneigt. Damit die Kabelbahnen 1 stapelbar sind, ist üblicherweise eine Neigung von mehr als 90° vorgesehen.

Die Kabelbahn 1 ist zur Aufnahme von Kabel, Leitungen und Rohren 9 vorgesehen, die ein erhebliches Gewicht aufweisen können.

Die Kabelbahn 1 ist auf Ausleger 2 abgelegt, die in einem Stützabstand a voneinander beanstandet von Halteprofilen 3 gehalten sind. Der Stützabstand a wird in Abhängigkeit der zu tragenden Last und der Festigkeit der Kabelbahn 1 gewählt.

Durch die Einformungen von Transversalsicken 111 und Axialsicken 112 in den Kabelbahnboden 11 wurde die Biegefestigkeit der Kabelbahn 1 erhöht. Bodenperforationen 110 im Kabelbahnboden 11 und Wandperforationen 120 in den Seitenwänden 12 definieren Trennlinien T, welche je eine der Transversalsicken 111 durchlaufen und Solltrennstellen bilden, an denen Segmente der Kabelbahn 1 abtrennbar sind.

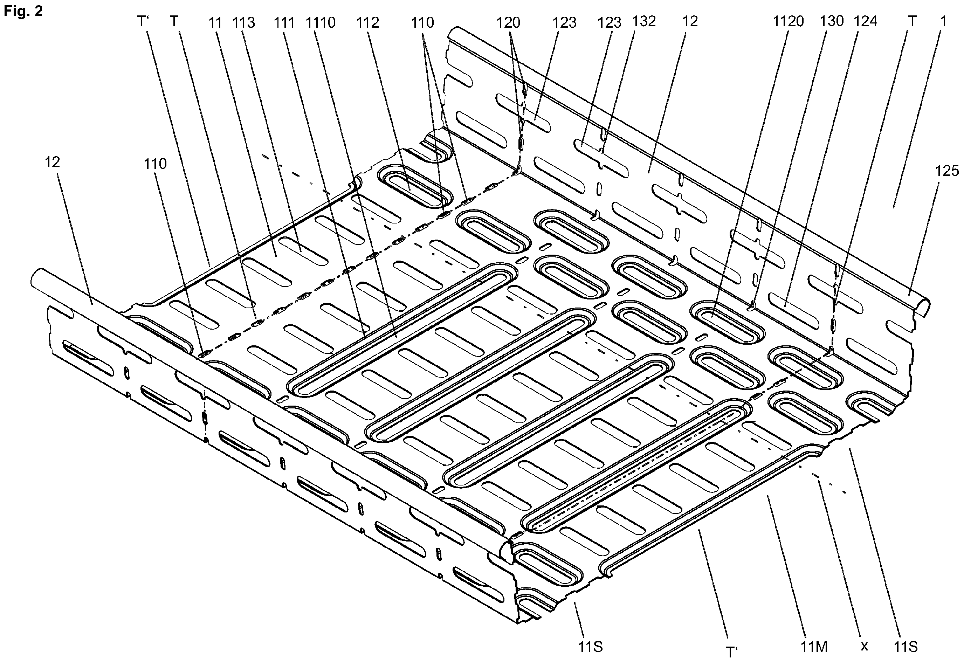

Fig. 2 zeigt einen Teil der Kabelbahn 1 von Fig. 1, deren Kabelbahnboden 11 einen zwischen zwei Seitenbereichen 11S liegenden Mittelbereich 11M aufweist.

Im Kabelbahnboden 11 sind Bodenperforationen 110 und in den Seitenwänden 12 sind Wandperforationen 120 vorgesehen, die je entlang einer Trennlinie T verlaufen und eine Solltrennstelle bilden.

Durch strichpunktierte Trennlinien T sind zwei Ausführungsbeispiele von Sollbruchstellen markiert.

In einer ersten vorzugsweisen Ausgestaltung ist eine Trennlinie T, die auf der linken Seite gezeigt ist, im Wesentlichen durch Bodenperforationen 110 und Wandperforationen 120 definiert, die in einer Ebene senkrecht zur Kanalachse x verlaufen und die eine Solltrennstelle bilden, die mittels eines Trennwerkzeugs, wie einer Trennscheibe oder einer Blechschere, relativ einfach aufgetrennt werden kann.

Die Bodenperforationen 110 und die Wandperforationen 120 sind relativ schmale Längslochungen oder Längsschlitze, welche die Festigkeit der Kabelbahn 1 kaum reduzieren. Sofern hingegen schweres Kabelmaterial in die Kabelbahn eingelegt wird, können die Bodenperforationen 110 und die Wandperforationen 120 die Tragfähigkeit der Kabelbahn 1 geringfügig beschränken, sodass sich der Kabelbahnboden 11 leichter durchbiegen kann.

In einer zweiten vorzugsweisen Ausgestaltung ist eine Trennlinie T, die auf der rechten Seite gezeigt ist, im Wesentlichen durch Bodenperforationen 110, Wandperforationen 120 und eine Transversalsicke 111 definiert, die in einer Ebene senkrecht zur Kanalachse x verlaufen und eine Solltrennstelle bilden.

Die in der zweiten bevorzugten Ausgestaltung vorzugsweise im Mittelbereich 11M vorgesehenen Transversalsicken 111 sind in den Kabelbahnboden 11 eingeformt und verjüngen sich nach unten gegen die Aussenseite zu einem Transversalschlitz 1110, der eine durchgehende Schlitzöffnung bildet.

Die in der zweiten Ausgestaltung realisierte Solltrennstelle kann aufgrund des vergleichsweise langen und durchgehend geöffneten Transversalschlitzes 1110 mittels eines Trennwerkzeugs, wie einer Trennscheibe oder einer Blechschere, noch leichter aufgetrennt werden kann.

Durch die Transversalsicke 111 resultiert hingegen keine Schwächung, sondern eine Verstärkung des Kabelbahnbodens 11, der sich trotz der Bodenperforationen 110 und der Wandperforationen 120 kaum mehr durchbiegen kann. Die Integration der Transversalsicken 111 in die Sollbruchstellen hat daher zwei wesentliche Vorteile, die sich ideal ergänzen.

Die Kabelbahn 1 weist vorzugsweise entweder nur die erste Art von Solltrennstellen oder nur die zweite Art von Solltrennstellen auf.

Die Bodenperforationen und die Wandperforationen bilden eine leicht erkennbare Markierung, weshalb eine Trennstelle nicht mehr manuell zu markieren ist. Da die Trennlinie T in einer Ebene senkrecht zur Kanalachse x verläuft, kann ein Kabelbahnsegment präzise rechtwinklig zur Kanalachse x abgetrennt werden.

Die Transversalsicken 111 sind entlang der Kanalachse x vorzugsweise in gleichen Abständen parallel zueinander angeordnet und erstrecken sich senkrecht zur Kanalachse x.

Die gegenseitigen Abstände benachbarter Transversalsicken 111 in Richtung der Kanalachse x liegen vorzugsweise in einem Bereich von 2 cm - 12 cm. Die Länge der Transversalsicken 111 definiert die Breite des Mittelbereichs des Kabelbahnbodens und beträgt vorzugsweise 2/3 - 4/5 der Breite des Kabelbahnbodens 11. Die Breite des Mittelbereichs 11M kann hingegen auch maximiert werden.

Die Transversalsicken 111 ersetzen in der zweiten Ausgestaltung eine Serie der Bodenperforationen 110 und bilden mit dem Längsschlitz 1110 eine lange Schlitzöffnung entlang der Trennlinie T.

Die Bodenperforationen und die Wandperforationen, die in beiden Ausgestaltungen vorzugsweise dieselben Abmessungen aufweisen, sind vorzugsweise als Langlöcher vorzugsweise mit einer Länge von 3 mm - 8 mm und einer Breite von 1 mm - 4 mm ausgebildet und durchstossen den Kabelbahnboden 11.

Gezeigt sind fünf intakte Transversalsicken 111 und zugeordnete Reihen von Bodenperforationen 110 und Wandperforationen 120, die konsequenterweise fünf Trennlinien T bilden, an denen die Kabelbahn 1 wahlweise aufgetrennt werden kann. Bei einem Abstand der Transversalsicken 111 von 4 cm kann die Kabelbahn 1 entlang den Trennlinien T daher um 4 cm oder ein Vielfaches davon gekürzt werden.

Die Auftrennung von Kabelbahnmaterial bzw. Blech ist dabei nur in den Seitenbereichen 11S und im Bereich der Seitenwände 12 erforderlich.

In den Seitenbereichen 11S des Kabelbahnbodens 11 sind in dieser vorzugsweisen Ausgestaltung der Kabelbahn 1 zudem zwei Reihen von Axialsicken 112 vorgesehen, die sich parallel zur Kanalachse x erstrecken und die sich nach unten je zu einem durchgängigen Axialschlitz 1120 hin verjüngen. Jede der Trennlinien T durchläuft in jedem der Seitenbereiche 11S eine der Axialsicken 112, weshalb sich das Material, das beim Abtrennen eines Kabelbahnsegments aufzutrennen ist, weiter reduziert und die Festigkeit der Kabelbahn 1 aufgrund der Ausbildung der Axialsicke 112 nicht reduziert ist.

In dieser vorzugsweisen Ausgestaltung der Kabelbahn 1 sind im Kabelbahnboden 11 und in den Seitenwänden 12 zudem langgestreckte Belüftungsöffnungen 113, 123 bzw. Langlöcher vorgesehen, die parallel zur Kanalachse x verlaufen.

In den Seitenwänden 12 sind Belüftungsöffnungen 123 vorgesehen, die von den Trennlinien T durchlaufen werden, weshalb sich das Material, das beim Abtrennen eines Kabelbahnsegments aufzutrennen ist, weiter reduziert.

An die Belüftungsöffnungen 123, die von den Trennlinien T durchlaufen werden, schliessen beidseitig auf einander gegenüberliegenden Seiten Adaptionsöffnungen 132 an, die sich senkrecht zur Kanalachse x entlang der zugehörigen Trennlinie T erstrecken.

Die Adaptionsöffnungen 132 haben zwei wesentliche Vorteile. Einerseits reduziert sich wiederum das Material, das beim Abtrennen eines Kabelbahnsegments aufzutrennen ist. Zudem sind die Seiten der Adaptionsöffnungen 132 gegen die Trennlinie T gerundet, weshalb nach dem Auftrennen der durch die Trennlinie T definierten Solltrennstelle keine scharfen Ecken verbleiben, an denen sich das Installationspersonal verletzen könnte.

Die Adaptionsöffnung 132 verjüngt sich vorzugsweise entlang einer Kurve oder entlang einer Kurve und asymptotisch gegen die Trennlinie T. Die Form der Adaptionsöffnungen 132 wird vorzugsweise in Abhängigkeit des Trennwerkzeugs, mittels dessen das Kabelsegment abgetrennt wird, oder entsprechend der Breite des abgetragenen Materials, gewählt.

Beim Übergang zwischen dem Kabelbahnboden 11 und den Seitenwänden 12 sind innerhalb jeder Trennlinie T Eckperforationen 130 vorgesehen. Die Eckperforationen 130 haben wiederum verschiedene Vorteile. Einerseits reduziert sich wiederum das Material, das beim Abtrennen eines Kabelbahnsegments aufzutrennen ist. Andererseits kann das Trennwerkzeug an den Eckperforationen 130 vorteilhaft angesetzt werden. Zudem sind Eckportionen normalerweise nicht leicht zu entfernen. Weiterhin Verbleiben nach dem Trennvorgang typischerweise an den Ecken störende Gräte, Kanten und Spitzen, an denen sich das Installationspersonal verletzen könnte. Die Ecken bilden zudem Bereiche, an denen das Installationspersonal normalerweise Hand anlegt, weshalb die Verletzungsgefahr in diesem Bereich besonders hoch ist. Durch die Anordnung von Eckperforationen 130 in diesem Bereich kann dieses Problem vollständig vermieden werden.

Fig. 2 zeigt ferner, dass die gezeigte Kabelbahn 1 oder das Kabelbahnsegment beidseitig entlang einer Trennlinie T von einem weiteren Teil einer Kabelbahn 1 abgetrennt wurde. Beidseitig sind daher Trennlinien T' nach dem Abtrennen verblieben.

Bei dieser Ausgestaltung der Kabelbahn 1 weisen die Seitenwände 12 je einen Wandabschluss 125 auf, der durch einen nach aussen gerollten Teil des Basismaterials gebildet wird.

Typischerweise wird ein Blechstück bearbeitet, in das alle Öffnungen, Perforationen und Sicken eingearbeitet werden. Vorzugsweise wird bei einem nächsten Arbeitsschritt an den Aussenseiten je einen Wandabschluss 125 gebildet, indem die aussen liegenden Kanten des Blechstücks erfasst und beispielsweise je um einen zylindrischen Körper gebogen werden. In der Folge werden die Seitenwände 12 erfasst und um einen Winkel von typischerweise 75° bis 90° nach oben gegeneinander gebogen.

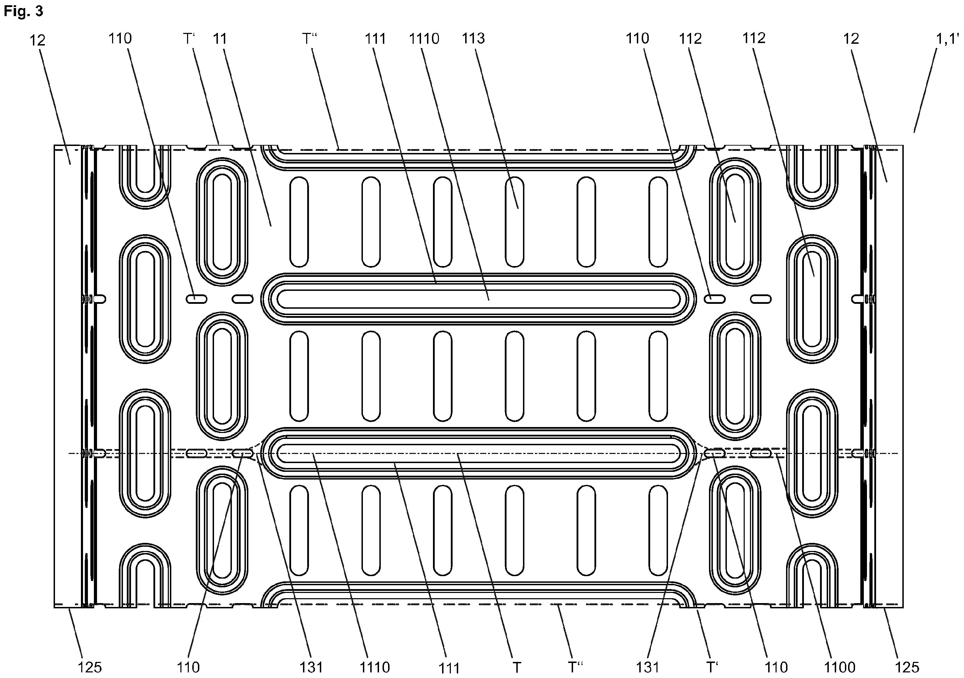

Fig. 3 zeigt eine Hälfte der Kabelbahn 1 von Fig. 2 mit Blick von oben auf den Kabelkanalboden 11. Die Kabelbahn 1 von Fig. 2 wurde entlang der dort eingezeichneten Trennlinie T aufgetrennt, weshalb in Fig. 3 ein Kabelbahnsegment 1' vorliegt.

In Fig. 3 ist eine weitere Trennlinie T eingezeichnet, parallel zu der strichpunktierte Linien zwischen den Transversalsicken 111, den Bodenperforationen 110 und den Wandperforationen 120 verlaufen, die eine Verformung 1100 entlang der Trennlinie T symbolisieren. Die Verformung 1100 erleichtert die Führung des Trennwerkzeug und somit das Abtrennen des anschliessenden Kabelbahnsegments.

Die Verformung 1100 verläuft ausgehend von den Enden der Transversalsicke 111 entlang symmetrischen Kurven asymptotisch gegen die zugewandten Bodenperforationen 110.

Sofern die Verformung in diesem Bereich entfernt wird, resultieren Adaptionsausnehmungen 131, die asymptotisch gegen die Bodenperforationen 110 verlaufen. Störende Ecken können daher auch im Bereich der Transversalsicke 111 vermieden werden. Die Axialsicken 112 können ebenfalls mit Adaptionsausnehmungen versehen werden, die gegen die Trennlinie T oder die Bodenperforationen 110 verlaufen.

An beiden Enden des Kabelbahnsegments sind Trennlinien T', T'' nach Auftrennung der Solltrennstelle entlang der Trennlinie T gezeigt. Die erste Trennlinie T' resultiert, wenn die Trennung ohne das Abtragen von Material beispielsweise mittels eines Laserstrahls erfolgt. Die zweite Trennlinie T'' resultiert, wenn das Trennwerkzeug eine Trennscheibe ist, die eine Breite aufweist, die zumindest annähernd der Breite der Perforationen 110, 120, 130, 1250 entspricht. In diesem Fall verbleiben praktisch keine Ecken und Kanten.

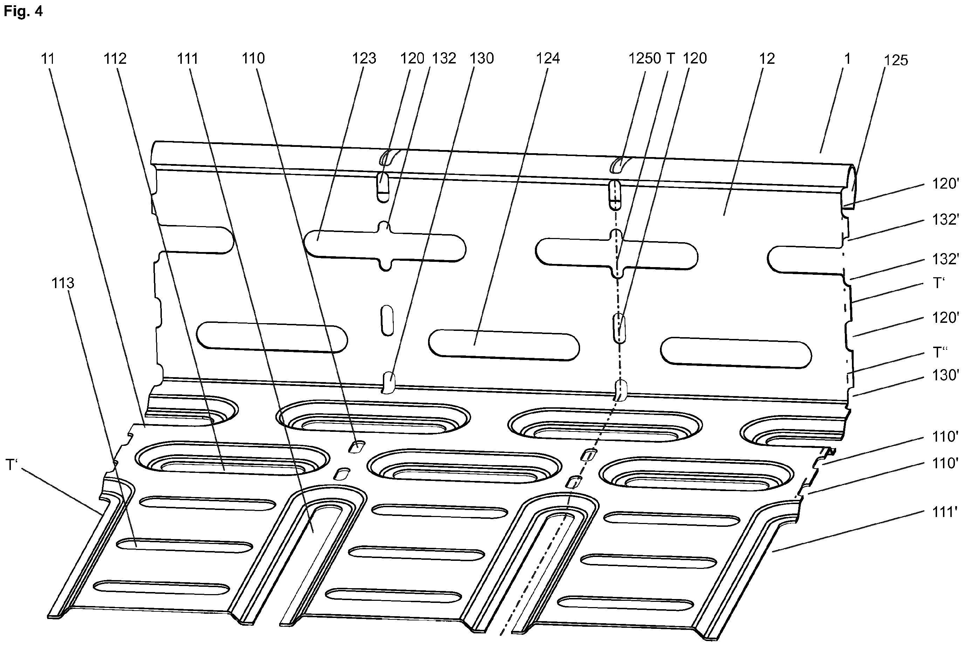

Fig. 4 zeigt einen Längsschnitt entlang der Kanalachse x der Kabelbahn 1 von Fig. 3 mit einer Hälfte des Kabelbahnbodens 11 und einer Seitenwand 12 an die oben der nach aussen gerollte Wandabschluss 125 anschliesst. Der gerollte Wandabschluss 125 ist ein besonderes Hindernis für das Abtrennen eines Kabelbahnsegments, weshalb im Bereich der Trennlinien T Abschlussperforationen 1250 in den Wandabschluss 125 eingearbeitet sind. Der Installateur kann mit dem Trennwerkzeug daher vorteilhaft in eine Eckperforation 130 und/oder in eine Abschlussperforation 52 eingreifen und den Trennvorgang beginnen.

Die weiteren Materialteile im Bereich der Trennlinie T lassen sich vergleichsweise leicht auftrennen, weshalb die Abtrennung eines Kabelbahnsegments schnell und sicher vollzogen werden kann.

Beidseits ist wiederum je eine aufgetrennte erste Trennlinie T' und durch eine strichpunktierte Linie eine zweite aufgetrennte Trennlinie T'' gezeigt. Dargestellt sind die aufgetrennten Bodenperforationen 110', die aufgetrennten Wandperforationen 120', eine aufgetrennten Eckperforation 130' und aufgetrennte Adaptionsperforationen 132'. Es ist gezeigt, dass störende Ecken und Kanten weitgehend vermieden wurden. Durch eine weitere Optimierung der Bodenperforationen 110, der Wandperforationen 120, der Eckperforationen 130, der Adaptionsperforationen 132 und der Abschlussperforationen 1250, beispielsweise mit asymptotisch verlaufenden Enden, können störende Ecken und Kanten vollständig vermieden werden.

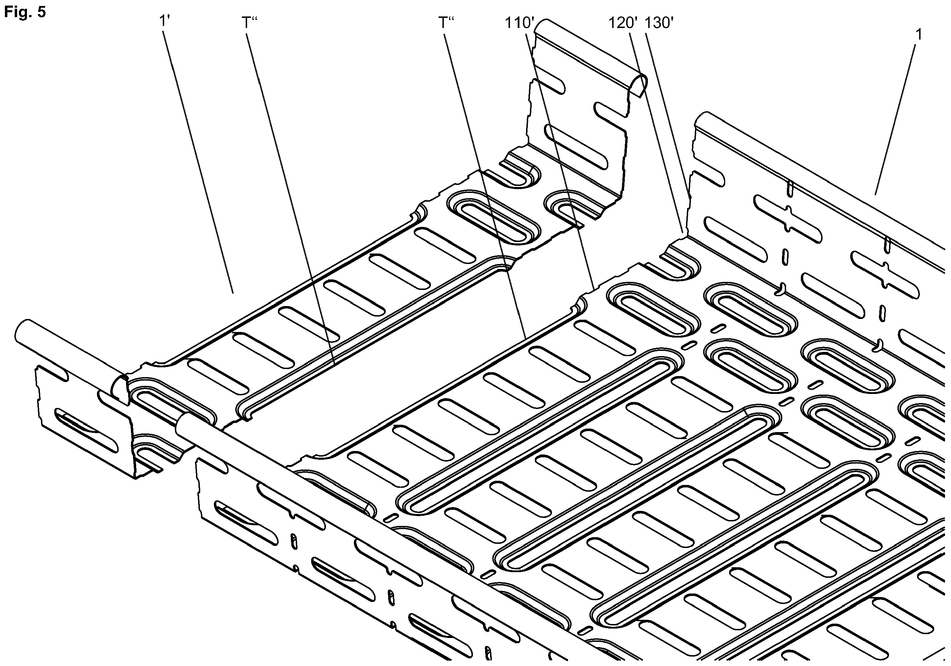

Fig. 5 zeigt die Kabelbahn 1 von Fig. 2 mit einem abgetrennten Kabelbahnsegment 1' von oben gesehen.

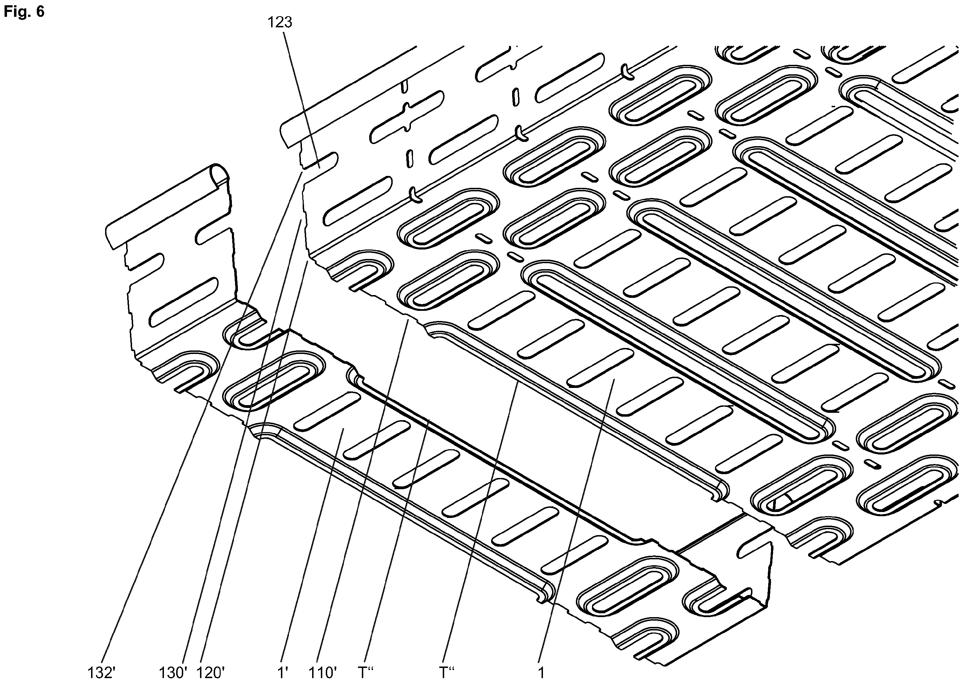

Fig. 6 zeigt die Kabelbahn 1 mit dem abgetrennten Kabelbahnsegment 1' von Fig. 5 von unten gesehen.

In Fig. 5 und Fig. 6 wurde Trennlinie T mittels einer Trennscheibe aufgetrennt, deren Breite der Breite der Perforationen 110, 120, 130, 1250 entspricht. Der Übergang zwischen den aufgetrennten Perforationen 110', 120', 130' und dem aufgetrennten Material ist nur noch ansatzweise erkennbar. Auch an den aufgetrennten Belüftungsöffnungen 123 sind aufgrund der aufgetrennten Adaptionsausnehmungen 132' keine störenden Ecken oder Kanten vorhanden. Nach der Abtrennung des Kabelbahnsegments 1 besteht daher keine Verletzungsgefahr für das Installationspersonal.

### Bezugszeichenliste

- 1: Kabelbahn, Kabelbahneinheiten
- 1': Kabelbahnsegment
- 10: Kabelführungsvorrichtung mit wenigstens einer Kabelbahn
- 11: Kabelbahnboden
- 11M: Mittelbereich des Kabelbahnbodens
- 115: Seitenbereiche des Kabelbahnbodens
- 110: Bodenperforationen
- 110': aufgeschnittene Bodenperforationen
- 1100: Verformung
- 111: Transversalsicken
- 1110: Transversalschlitz
- 111': aufgetrennte Transversalsicken
- 112: Axialsicken
- 1120: Axialschlitz
- 113: Belüftungsöffnung
- 12: Seitenwände
- 120: Wandperforationen
- 120': aufgetrennt Wandperforationen
- 123: Belüftungsöffnung mit Adaptionsausnehmung 132
- 124: Belüftungsöffnung ohne Adaptionsausnehmung
- 125: Wandabschluss
- 1250: Abschlussperforationen
- 130: Eckperforationen
- 131: erste Adaptionsausnehmung
- 132: zweite Adaptionsausnehmung
- 132': aufgetrennte zweite Adaptionsausnehmung
- 2: Ausleger
- 3: Halteprofile, beispielsweise Deckenstützen
- a: Stützabstand
- T: Trennlinie
- T': Trennlinie nach Abtrennung eines Kabelbahnsegments 1'
- x: Kanalachse

## Patentansprüche

1. Kabelbahn (1) aus Metall mit einer Kanalachse (x), die sich entlang einer Gerade oder einer Kurve erstreckt, zur Aufnahme von Kabeln und Leitungen, umfassend einen Kabelbahnboden (11), an den auf beiden Seiten vorzugsweise um 90° bis 105° gegenüber dem Kabelbahnboden (11) geneigte Seitenwände (12) anschliessen und der einen zwischen zwei Seitenbereichen (11S) liegenden Mittelbereich (11M) aufweist, **dadurch gekennzeichnet, dass** im Kabelbahnboden (11) Bodenperforationen (110) und in den Seitenwänden (12) Wandperforationen (120) entlang von Trennlinien (T) angeordnet sind, die in einer Ebene senkrecht zur Kanalachse (x) verlaufen und dass die den Trennlinien (T) zugeordneten Bodenperforationen (110) und Wandperforationen (120) für jede der Trennlinien (T) eine Solltrennstelle bilden, die mittels eines Trennwerkzeugs auftrennbar ist.

2. Kabelbahn (1) nach Anspruch 1, **dadurch gekennzeichnet, dass** der Kabelbahnboden (11) sich senkrecht zur Kanalachse (x) erstreckende Transversalsicken (111) aufweist, die entlang der Kanalachse (x) in gleichen oder ungleichen Abständen parallel zueinander in den Kabelbahnboden (11) eingeformt sind und die sich zu einem Transversalschlitz (1110) hin verjüngen, und dass jede der Trennlinien (T) durch eine der Transversalsicken (111) hindurch verläuft, sodass die Bodenperforationen (110), die Wandperforationen (120) und die zugeordnete Transversalsicke (111) eine Solltrennstelle bilden, die mittels eines Trennwerkzeugs auftrennbar ist.

3. Kabelbahn (1) nach Anspruch 2, **dadurch gekennzeichnet, dass** jede Transversalsicke (111) mit zugeordneten Bodenperforationen (110) und Wandperforationen (120) entlang einer Trennlinie (T) verläuft.

4. Kabelbahn (1) nach Anspruch 1, 2 oder 3, **dadurch gekennzeichnet, dass** die gegenseitigen Abstände benachbarter Trennlinien (T) oder Transversalsicken (111) in Richtung der Kanalachse (x) in einem Bereich von 2 cm - 12 cm liegen und/oder dass die Länge der Transversalsicken (111) 2/3 - 4/5 der Breite des Kabelbahnbodens (11) beträgt.

5. Kabelbahn (1) nach einem der Ansprüche 1 - 4, **dadurch gekennzeichnet, dass** beim Übergang zwischen dem Kabelbahnboden (11) und wenigstens einer der Seitenwände (12) innerhalb der Trennlinie (T) eine Eckperforation (130) vorgesehen ist.

6. Kabelbahn (1) nach einem der Ansprüche 2 - 5, **dadurch gekennzeichnet, dass** die Transversalsicken (111) in den Querschnitt der Kabelbahn (1) hineinragen oder nach aussen ragen.

7. Kabelbahn (1) nach einem der Ansprüche 1 - 6, **dadurch gekennzeichnet, dass** entlang jeder Trennlinie (T) wenigstens eine Verformung des Kabelbahnbodens (11) oder der Seitenwände (12) oder des Kabelbahnbodens (11) und der Seitenwände (12) vorgesehen ist, deren Breite gleich oder geringer als die Breite der Bodenperforationen (110) und der Wandperforationen (120) ist.

8. Kabelbahn (1) nach einem der Ansprüche 1 - 7, **dadurch gekennzeichnet, dass** in den Seitenbereichen (11S) sich parallel zur Kanalachse (x) erstreckende Axialsicken (112) vorgesehen sind, die sich nach unten zu einem Axialschlitz (1120) hin verjüngen und dass jede Trennlinie (T) wenigstens eine der Axialsicken (112) durchläuft.

9. Kabelbahn (1) nach einem der Ansprüche 1 - 8, **dadurch gekennzeichnet, dass** im Kabelbahnboden (11) und/oder in den Seitenwänden (12) Belüftungsöffnungen (113, 123) vorgesehen sind und dass jede Trennlinie (T) wenigstens eine der Belüftungsöffnungen (113, 123) durchläuft.

10. Kabelbahn (1) nach einem der Ansprüche 2 - 9, **dadurch gekennzeichnet, dass** an die Transversalschlitze (1110) und/oder an die Axialschlitze (1120) und/oder an die Belüftungsöffnungen (113, 123) einseitig oder auf einander gegenüberliegenden Seiten eine Adaptionsöffnung (131, 132) anschliesst, die sich senkrecht zur Kanalachse (x) entlang der zugehörigen Trennlinie (T) erstreckt.

11. Kabelbahn (1) nach Anspruch 10, **dadurch gekennzeichnet, dass** sich die Adaptionsöffnung (131, 132) entlang der zugehörigen Trennlinie (T) verjüngt oder dass die Seiten der Adaptionsöffnung (131, 132) entlang einer Kurve oder entlang einer Kurve und asymptotisch gegen die Trennlinie (T) verlaufen.

12. Kabelbahn (1) nach einem der Ansprüche 1 - 11, **dadurch gekennzeichnet, dass** die vom Kabelbahnboden (11) abgewandten Seiten der Seitenwände (12) je einen Wandabschluss (125) aufweisen, der vorzugsweise mit einer Abschlussperforation (1250) versehen ist, die von der Trennlinie (T) durchlaufen wird.

13. Kabelbahn (1) nach einem der Ansprüche 1 - 12, **dadurch gekennzeichnet, dass** die Bodenperforation (110) und die Wandperforationen (120) eine Breite entlang der Kanalachse (x) aufweisen, die in einem Bereich von 1 mm - 4 mm liegt.

14. Kabelführungsvorrichtung (10) mit wenigstens einer Kabelbahn (1) nach einem der Ansprüche 1 - 13, die von wenigstens zwei Auslegern (2) getragen wird, die durch einen Stützabstand voneinander entfernt von Halteprofilen (3) gehalten sind.
